(19) Europäisches Patentamt
European Patent Office
Office européen des brevets

(11) **EP 4 653 947 A1**

(12) **EUROPEAN PATENT APPLICATION**
published in accordance with Art. 153(4) EPC

(43) Date of publication:
**26.11.2025 Bulletin 2025/48**

(21) Application number: **23923240.8**

(22) Date of filing: **20.02.2023**

(51) International Patent Classification (IPC):
***G03B 21/00*** (2006.01)

(52) Cooperative Patent Classification (CPC):
**G03B 21/00**

(86) International application number:
**PCT/CN2023/077099**

(87) International publication number:
**WO 2024/174054 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Fuyao Glass Industry Group Co., Ltd.
Fuqing, Fujian 350300 (CN)**

(72) Inventors:
  • **CHEN, Hongwei
    Fujian 350300 (CN)**

  • **LIN, Shengye
    Fujian 350300 (CN)**
  • **LIU, Yu
    Fujian 350300 (CN)**
  • **ZHENG, Jiansen
    Fujian 350300 (CN)**
  • **JIANG, Bingming
    Fujian 350300 (CN)**

(74) Representative: **Patentanwälte Olbricht Buchhold
Keulertz
Partnerschaft mbB
Neue Mainzer Straße 75
60311 Frankfurt am Main (DE)**

(54) **PROJECTION DISPLAY DEVICE AND VEHICLE**

(57)    Provided in the present disclosure are a projection display device and a vehicle. Two opposite sides of the projection display device are a first side and a second side respectively. The projection display device includes an inner light-transmitting layer, a display layer and an outer light-transmitting layer which are sequentially stacked in a direction from the first side toward the second side. The display layer is configured to display a projection image received from a projection light source. The inner light-transmitting layer is configured to allow the projection image displayed on the display layer to be displayed toward the first side. The outer light-transmitting layer is configured to restrict the projection image displayed on the display layer from being displayed toward the second side. The projection display device according to the present disclosure can display the projection image toward one of the two opposite sides thereof, and substantially does not display the projection image toward the other side, thereby achieving a privacy protection function.

FIG. 1

**Description**

TECHNICAL FIELD

The present disclosure relates to the technical field of glass, and particularly to a projection display device and a vehicle.

BACKGROUND

With the increasing using of vehicles, there are more and more demands on vehicles, one of which is more space for the presentation carriers of information, especially the applications of projecting images onto the glass of vehicles with projection light sources.

China patent application CN113415051A discloses a glass with display function and a product thereof, including an inner glass, a display unit layer and an outer glass which are arranged in a stacked configuration. The outer glass is used to quantitatively control the transmittance of natural light, so as to suppress interference of sunlight on images displayed on the display unit layer under strong external light conditions, thereby improving image contrast.

SUMMARY

The present disclosure provides a projection display device and a vehicle, which can display a projection image toward one of two opposite sides of the projection display device, and substantially does not display the projection image toward the other side, thereby achieving a privacy protection function.

It is a first aspect of the present disclosure to provide a projection display device, two opposite sides of which are a first side and a second side respectively. The projection display device includes an inner light-transmitting layer, a display layer and an outer light-transmitting layer which are sequentially stacked in a direction from the first side toward the second side. The display layer is configured to display a projection image received from a projection light source. The inner light-transmitting layer is configured to allow the projection image displayed on the display layer to be displayed toward the first side. The outer light-transmitting layer is configured to restrict the projection image displayed on the display layer from being displayed toward the second side.

Optionally, light projected by the projection light source is polarized light. The inner light-transmitting layer is configured to transmit the polarized light reflected by the display layer, and/or the outer light-transmitting layer is configured to absorb the polarized light transmitted through the display layer.

Optionally, the inner light-transmitting layer includes a first light-transmitting plate with an incident surface facing the projection light source, and the first light-transmitting plate has a transmittance of greater than or equal to 90% for the polarized light.

Optionally, the projection image displayed by the display layer has a first luminance, the projection image reflected by the incident surface of the first light-transmitting plate has a second luminance, and a ratio of the first luminance to the second luminance is greater than or equal to 4.5.

Optionally, the polarized light is P-polarized light, which is incident on the incident surface at an incident angle $\theta_i$ that satisfies a formula $\theta_i = \tan^{-1}(n_g/n_i)$, where $n_g$ denotes a refractive index of the first light-transmitting plate, and $n_i$ denotes a refractive index of air.

Optionally, the inner light-transmitting layer further includes a second light-transmitting plate, which is disposed between the first light-transmitting plate and the display layer.

Optionally, the outer light-transmitting layer includes a polarizing layer having an optical axis, and the optical axis is orthogonal to a polarization direction of the polarized light incident on the polarizing layer.

Optionally, the outer light-transmitting layer further includes a third light-transmitting plate, the polarizing layer is disposed between the display layer and the third light-transmitting plate, and the third light-transmitting plate has a transmittance of less than or equal to 50% for natural light.

Optionally, the outer light-transmitting layer further includes a third light-transmitting plate disposed between the display layer and the polarizing layer.

Optionally, a luminance of the projection image transmitted through the polarizing layer is a third luminance, and the third luminance is less than or equal to 5 nits.

It is a second aspect of the present disclosure to provide a vehicle, which includes a vehicle window and a projection light source. At least part of the vehicle window is the projection display device according to the embodiments of the first aspect. The projection light source is configured to provide a projection image toward the inner light-transmitting layer of the projection display device.

The projection display device of the present disclosure can display the projection image toward one of the two opposite sides of the projection display device, and substantially does not display the projection image toward the other side, thereby achieving a privacy protection function.

BRIEF DESCRIPTION OF THE DRAWINGS

For a clearer illustration of technical features in the embodiments of the present disclosure or the prior art, a brief description of the drawings for the embodiments or the prior art will be given below. The drawings described below involve only some embodiments of this disclosure. For those of ordinary skill in the art, other drawings can be derived from these drawings without any inventive efforts. In the drawings:

FIG. 1 illustrates a schematic diagram of a projection display device according to a first embodiment of the present disclosure;

FIG. 2 illustrates a schematic diagram of a projection display device according to a second embodiment of the present disclosure;

FIG. 3 illustrates a schematic diagram of a display module in FIG. 2;

FIG. 4 illustrates a schematic diagram of a projection display device according to a third embodiment of the present disclosure; and

FIG. 5 illustrates a schematic diagram of a projection display device according to a fourth embodiment of the present disclosure.

## DETAILED DESCRIPTION OF THE EMBODIMENTS

For a better understanding of the technical features of the present disclosure, a clear and complete description of the embodiments of the present disclosure will be set forth with reference to the drawings. The described embodiments are only a part, rather than all, of the embodiments of the present disclosure. All other embodiments derived by persons skilled in the art from the embodiments of the present disclosure without making inventive efforts shall fall within the scope of the present disclosure.

As used herein, the term "include/comprise" and variants thereof mean an openended inclusion, that is, "including but not limited to". Unless otherwise stated, the term "or" means "and/or". The term "based on" means "at least partially based on". The terms "an exemplary embodiment" and "an embodiment" mean "at least one exemplary embodiment". The term "another embodiment" means "at least one other embodiment". The terms "first", "second" and so on may refer to the same or different objects, and cannot be understood as indicating or implying relative importance or implicitly specifying the number of indicated technical features. The terms "inner" and "outer" are only used to distinguish different objects, and cannot be understood as limitations to any specific direction. Unless otherwise specified, "multi-layer" means two or more layers.

The inventors of the present disclosure have found that an image displayed by a glass with a display function in the prior art will be displayed toward both sides of the glass, resulting in privacy leakage. For example, when the glass is used as a vehicle window, if a person inside the vehicle uses a projection light source to project a projection image onto the glass, the projection image is not only visible to the person inside the vehicle, but also to people outside the vehicle, which may be undesirable for the person inside the vehicle.

To address the above issue, embodiments of a first aspect of the present disclosure provide a projection display device with a privacy protection function. The projection display device is applicable to display cabinets, architectural window curtain walls, automotive windows, marine vessel windows, rail vehicle windows, human-machine interaction, electrical appliances, information kiosks, etc.

Two opposite sides of the projection display device are a first side and a second side respectively. The projection display device includes an inner light-transmitting layer, a display layer and an outer light-transmitting layer which are sequentially stacked in a direction from the first side toward the second side. The display layer is configured to display a projection image received from a projection light source. The inner light-transmitting layer is configured to allow the projection image displayed on the display layer to be displayed toward the first side. The outer light-transmitting layer is configured to restrict the projection image displayed on the display layer from being displayed toward the second side, in other words, the outer light-transmitting layer is configured to block or hinder the projection image displayed on the display layer from being displayed toward the second side, thereby preventing the projection image displayed on the display layer from being seen or clearly seen by a person on the second side, thus providing a privacy protection function.

Optionally, the inner light-transmitting layer may be a single-layer or multi-layer structure, and the outer light-transmitting layer may also be a single-layer or multi-layer structure.

Exemplarily, the projection display device may be a projection display glass, the inner light-transmitting layer may be a glass in a single-layer or multi-layer configuration, and the outer light-transmitting layer may be a glass in a single-layer or multi-layer configuration.

In some embodiments, the light projected by the projection light source is polarized light. The polarized light may be linearly polarized light, circularly polarized light, or higher-order polarized light. In some embodiments, the light projected by the projection light source is P-polarized light, which is a kind of linearly polarized light. The use of P-polarized light in this embodiment provides the beneficial effect that, when the P-polarized light is incident at a specific angle, its reflectivity is substantially zero, which significantly reduces light reflection from the glass surface, thereby reducing image ghosting.

In this embodiment, the inner light-transmitting layer is configured to transmit the polarized light reflected by the display layer to allow the projection image displayed on the display layer to be displayed toward the first side; and/or the outer light-transmitting layer is configured to absorb the polarized light transmitted through the display layer to restrict the projection image displayed on the display layer from being displayed toward the second side.

The principles of the present disclosure will be described in detail below with reference to the drawings in conjunction with the exemplary embodiments.

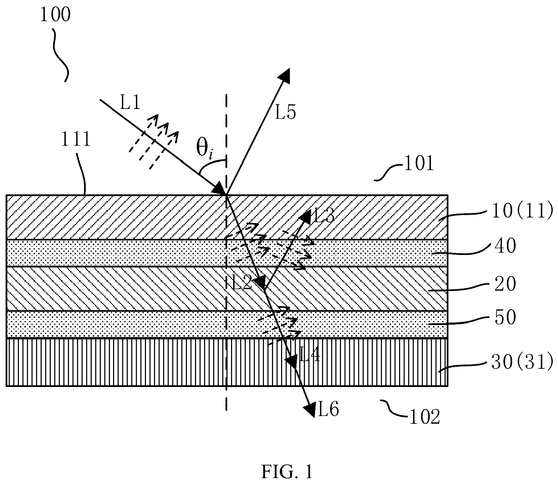

FIG. 1 illustrates a schematic diagram of a projection display device 100 according to a first embodiment of the present disclosure.

As illustrated in FIG. 1, two opposite sides of the projection display device 100 are a first side 101 and a second side 102, respectively. The projection display device 100 includes an inner light-transmitting layer 10, a display layer 20 and an outer light-transmitting layer 30 which are sequentially stacked in a direction from the first side 101 toward the second side 102. It can be understood that the display layer 20 is located between the inner light-transmitting layer 10 and the outer light-transmitting layer 30. A projection light source projects light toward the inner light-transmitting layer 10. In this embodiment, light projected by the projection light source (not shown in the figures) is polarized light L1.

In this embodiment, as illustrated in FIG. 1, the inner transparent layer 10 includes a first light-transmitting plate 11 with an incident surface 111 facing the projection light source. The polarized light L1 projected by the projection light source is incident on the incident surface 111 of the first light-transmitting plate 11. At least part of the polarized light L1 transmits through the first light-transmitting plate 11 to form a first transmitted light L2. The first transmitted light L2 is incident on the display layer 20, and the display layer 20 reflects part of the first transmitted light L2 to form a first reflected light L3 (i.e., the projection image). The first light-transmitting plate 11 allows the first reflected light L3 to transmit through, thereby enabling display of the projection image toward the first side 101.

In this embodiment, as illustrated in FIG. 1, the outer light-transmitting layer 30 includes a polarizing layer 31. Part of the first transmitted light L2 transmits through the display layer 20 to form a second transmitted light L4, which is incident on the polarizing layer 31. The polarizing layer 31 has an optical axis orthogonal to a polarization direction of the second transmitted light L4. Consequently, substantially all or most of the second transmitted light L4 is absorbed by the polarizing layer 31 and cannot transmit through it, thereby restricting display of the projection image toward the second side 102. The dashed arrows in FIG. 1 indicate the polarization directions of the respective light.

In this embodiment, as illustrated in FIG. 1, a ratio of a luminance of the projection image displayed by the display layer 20 to a luminance of the projection image reflected by the incident surface 111 of the first light-transmitting plate 11 is greater than or equal to 4.5. For example, this ratio is greater than or equal to 10, or greater than or equal to 100. Therefore, even if a small amount of polarized light is reflected by the incident surface 111 to form a second reflected light L5, the resulting projection image exhibits significantly lower luminance than the luminance of the projection image displayed by the display layer 20, thus avoiding ghost images on the incident surface 111 of the first light-transmitting plate 11.

Exemplarily, the polarized light L1 projected by the projection light source is P-polarized light. As illustrated in FIG. 1, the P-polarized light is incident on the incident surface 111 of the first light-transmitting plate 11 at an incident angle $\theta_i$, which satisfies the formula $\theta_i = \tan^{-1}(n_g/n_i)$, where $n_g$ denotes a refractive index of the first light-transmitting plate 11, and $n_i$ denotes a refractive index of air. The angle $\theta_i$ is also referred to as a Brewster's angle. Theoretically, when the P-polarized light is incident on the incident surface 111 of the first light-transmitting plate 11 at the incident angle $\theta_i$, the reflectivity of the incident surface 111 for the P-polarized light is zero. Thus, it can effectively suppress the reflection of the P-polarized light from the first light-transmitting plate 11, and significantly reduce the luminance of the projection image reflected by the incident surface 111 of the first light-transmitting plate 11, thereby effectively avoiding ghost images on the incident surface 111.

In this embodiment, the luminance of the projection image transmitted by the polarizing layer 31 is less than or equal to 5 nits, such as less than or equal to 2 nits, or even less than or equal to 1 nit. Therefore, even if a small amount of the second transmitted light L4 transmits through the polarizing layer 31 to form a third transmitted light L6, the resulting projection image is difficult to be seen or clearly seen by a person located on the second side 102 of the projection display device 100, thereby still avoiding privacy leakage.

In this embodiment, optionally, the first light-transmitting plate 11 has a transmittance of greater than or equal to 60% for the polarized light L1, for example greater than or equal to 90%, such as 95% or 98%. The high transmittance of the first light-transmitting plate 11 for the polarized light L1 can improve the luminance of the projection image displayed by the display layer 20. For example, the first light-transmitting plate 11 may be a single-piece glass or a double-piece glass, and the double-piece glass may have a hollow interlayer.

Exemplarily, the polarizing layer 31 may be a flexible transparent substrate. For example, the polarizing layer 31 may be a linear polarization filter, specifically a thin-film polarizer, a filter or thin-film layer with a linearly dichroic material such as an anisotropic polymer layer, deformed metal nanoparticles, a nanoparticle linear thin-film polarizer, a metal polarizer, or the like.

The thin-film polarizer may be a multi-layer optical film structure, and molecules at a nanometer or micrometer scale may be arranged in the multi-layer structure. By controlling the orientation and thickness of these molecules, the wavelength and polarization response of the thin-film polarizer can be controlled.

The core film material that functions for polarization in the dichroic thin-film layer is a polyvinyl alcohol (PVA) film, which includes primarily of light atoms such as carbon, hydrogen, and oxygen, and is characterized by high light transmittance and high ductility. After being dyed in a dyeing tank, the surface of the PVA film becomes uniformly enriched with dichroic molecules, metal salts such as gold, silver, or iron, or dye molecules and polyethylene molecules. After an external force is applied to stretch the PVA film, molecular chains of the PVA film align along the direction of the external force. At this time, the dichroic molecules are also orderly distributed, so as to form the polarizing layer 31 with uniform dichroic absorption properties, with an optical axis perpendicular to the stretching direction. A nanoparticle linear thin-film polarizer is prepared by embedding prolate ellipsoidal nanoparticles into sodium silicate glass.

In this embodiment, optionally, the polarizing layer 31 may be one or a combination of a linear polarization filter and a phase retarder. The phase retarder may be a quarter- wavelength retarder or/and a half wavelength retarder.

In this embodiment, as illustrated in FIG. 1, the first light-transmitting plate 11 may be connected to the display layer 20 by a first adhesive layer 40, and the polarizing layer 31 may be connected to the display layer 20 by a second adhesive layer 50.

Optionally, the first light-transmitting plate 11, the first adhesive layer 40, the display layer 20, and the second adhesive layer 50 may be configured to not alter the polarization state of the polarized light L1 projected by the projection light source, that is, the polarization states of the polarized light L1, the first transmitted light L2, the first reflected light L3, and the second transmitted light L4 are the same, such as all being P-polarized light. This facilitates the configuration of the optical axis of the polarizing layer 31 according to the polarization state of the polarized light L1 without particularly considering the change in the polarization state.

However, the present disclosure is not limited thereto, and one or more of the first light-transmitting plate 11, the first adhesive layer 40, the display layer 20 and the second adhesive layer 50 may also be configured to alter the polarization state of the polarized light L1, that is, either some or all of the polarized light L1, the first transmitted light L2, the first reflected light L3 and the second transmitted light L4 may have different polarization states. In this case, the optical axis of the polarizing layer 31 needs to be configured according to the polarization state of the second transmitted light L4 incident on the polarizing layer 31.

In a feasible technical solution, the first adhesive layer 40 and the second adhesive layer 50 are made of a transparent adhesive material, which specifically may be polyvinyl butyral (PVB), polycarbonate, acoustic PVB, ethylene-vinyl acetate (EVA), thermoplastic polyurethane (TPU), ionomer, a thermoplastic material, or any combination thereof, or may be transparent optical adhesive (OCA), liquid optical clear adhesive (LOCA), optical clear resin (OCR), or the like.

Optionally, a transmittance of the first adhesive layer 40 and/or the second adhesive layer 50 for the polarized light L1 is greater than or equal to 85%, for example, greater than or equal to 90%, or even greater than or equal to 95%.

Optionally, a haze of the first adhesive layer 40 is less than or equal to 1%, for example, less than or equal to 0.4%.

Optionally, a thickness of the first adhesive layer 40 is in the range of 0.1 mm to 1 mm, for example, 0.38 mm or 0.76 mm, and a thickness of the second adhesive layer 50 is also in the range of 0.1 mm to 1 mm, for example, 0.38 mm or 0.76 mm.

In another feasible technical solution, different from the previous technical solution, the second adhesive layer 50 is made of a dark-colored adhesive material, which specifically may be one or more selected from the group consisting of a gray PVB film, a light gray PVB film, a blue PVB film, a light blue PVB film, a green PVB film, a gray PVB film, and a brown PVB film.

Optionally, the transmittance of the second adhesive layer 50 for the polarized light L1 is less than or equal to 50%, for example, less than or equal to 5%, or even less than or equal to 2%.

In this embodiment, the display layer 20 may provide display functionality across its entire area or a partial region. The display layer 20 may be one or more selected from the group consisting of a light-emitting diode (LED), an organic light-emitting diode (OLED), a liquid crystal display (LCD), a projection display film, and an electroluminescence. Among these, the LED, the LCD, and the OLED achieve a display effect by using an external electric field to excite internal luminescent material to emit light. The projection display achieves a display effect by using the unique high reflectivity of the projection display film to the light from a projector. The electroluminescence uses an electric field to enable electrons to collide with a luminescent center to produce energy level transitions to finally emit light. These display technologies offer rapid response, low energy consumptions, and wide viewing angles.

Optionally, the size of the display layer 20 may be equal to or smaller than that of the first light-transmitting plate 11, and the size of the polarizing layer 31 may be equal to or smaller than that of the first light-transmitting plate 11.

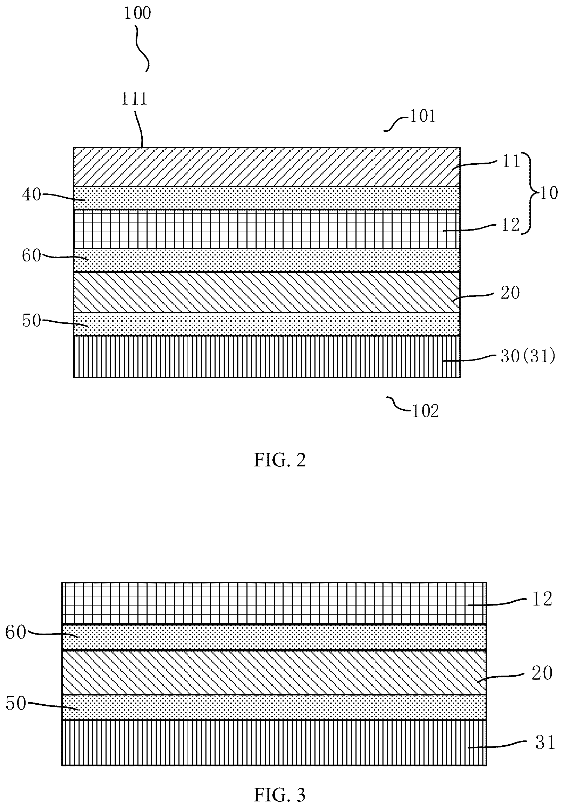

FIG. 2 illustrates a schematic diagram of a projection display device 100 according to a second embodiment of the present disclosure. The second embodiment differs from the first embodiment of the present disclosure in that the inner light-transmitting layer 10 further includes a second light-transmitting plate 12, which is disposed between the first light-transmitting plate 11 and the display layer 20. It can be understood that the first light-transmitting plate 11, the second light-transmitting plate 12, the display layer 20 and the polarizing layer 31 are sequentially stacked in the direction from the first side 101 toward the second side 102.

Optionally, the second light-transmitting plate 12 has a transmittance of greater than or equal to 90% for the polarized light L1, such as 90%, 95% or 98%. The high transmittance of the second light-transmitting plate 12 for the polarized light L1 can improve the brightness of the projection image displayed by the display layer 20. For example, the second light-transmitting plate 12 may be a transparent substrate, which may be made of a transparent material such as polyethylene terephthalate (PET), cellulose triacetate film (TAC), polymethyl methacrylate (PMMA), or the like.

In this embodiment, as illustrated in FIG. 2, the second light-transmitting plate 12 is connected to the display layer 20 through a third adhesive layer 60 made of a transparent adhesive material, which specifically may be polyvinyl butyral (PVB), polycarbonate, acoustic PVB, ethylene-vinyl acetate (EVA), thermoplastic polyurethane (TPU), ionomer, a thermoplastic material, or any combination thereof, or may be transparent optical adhesive (OCA), liquid optical clear adhesive (LOCA), or optical clear resin (OCR).

Optionally, a transmittance of the third adhesive layer 60 for the polarized light L1 is greater than or equal to 85%, for example, 90% or 95%.

Optionally, a thickness of the third adhesive layer 60 is in the range of 0.1 mm to 1 mm, for example, 0.38 mm or 0.76 mm.

Optionally, the size of the display layer 20 may be equal to or smaller than that of the first light-transmitting plate 11 and/or the second light-transmitting plate 12, and the size of the polarizing layer 31 may be equal to or smaller than that of the first light-transmitting plate 11 and/or the second light-transmitting plate 12.

In this embodiment, as illustrated in FIG. 3, the second light-transmitting plate 12, the third adhesive layer 60, the display layer 20, the second adhesive layer 50, and the polarizing layer 31 form a display module, in which the second light-transmitting plate 12 and the polarizing layer 31 serve as protective layers for the display layer 20, enabling the display module to be manufactured, mounted, and disassembled as an integral component. For example, when the display layer 20 is damaged, only the display module needs to be replaced, thereby reducing the maintenance cost of the projection display device.

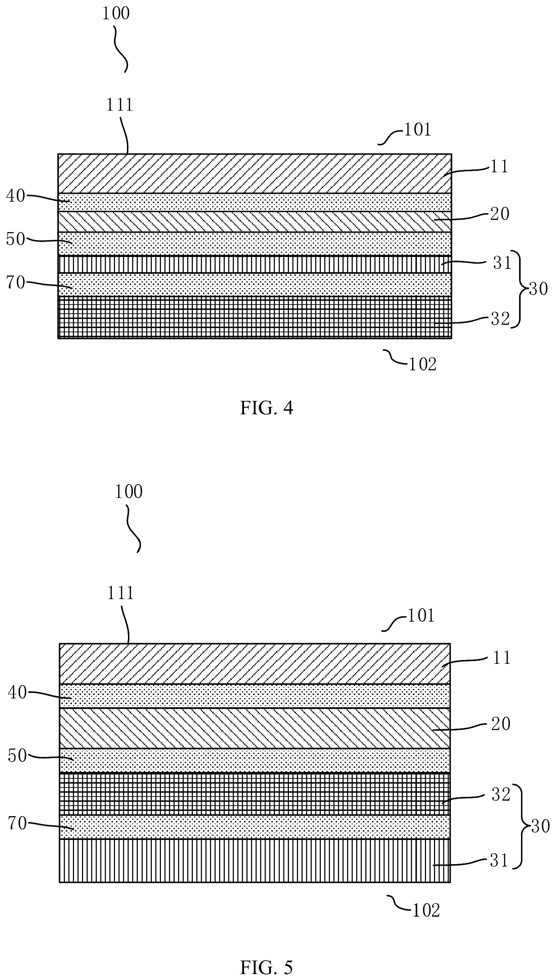

FIG. 4 illustrates a schematic diagram of a projection display device 100 according to a third embodiment of the present disclosure. The third embodiment differs from the first embodiment of the present disclosure in that the outer light-transmitting layer 30 further includes a third light-transmitting plate 32, and the polarizing layer 31 is disposed between the display layer 20 and the third light-transmitting plate 32. It can be understood that the first light-transmitting plate 11, the display layer 20, the polarizing layer 31 and the third light-transmitting plate 32 are sequentially stacked in the direction from the first side 101 toward the second side 102.

Optionally, the third light-transmitting plate 32 has a transmittance of less than or equal to 50% for natural light, for example, 40%, 30%, 20%, or 10%, so as to reduce the transmittance for natural light and suppress interference from external light on the image displayed on the display layer 20. For example, the third light-transmitting plate 32 may be a single-piece glass or a double-piece glass, and the double-piece glass may have a hollow interlayer.

In this embodiment, as illustrated in FIG. 4, the third light-transmitting plate 32 is connected to the display layer 20 through a fourth adhesive layer 70. The fourth adhesive layer 70 is made of a dark-colored adhesive material, which specifically may be a gray PVB film or ethylene-vinyl acetate (EVA), a light gray PVB film or EVA, a blue PVB film or EVA, a light blue PVB film or EVA, a green PVB film or EVA, a gray PVB film or EVA, or a brown PVB film or EVA.

Optionally, a transmittance of the fourth adhesive layer 70 for the polarized light L1 is less than or equal to 50%, for example, less than or equal to 5%, or even less than or equal to 2%.

Optionally, a thickness of the fourth adhesive layer 70 is in the range of 0.1 mm to 1 mm, for example, 0.38 mm or 0.76 mm.

Optionally, the size of the display layer 20 may be equal to or smaller than that of the first light-transmitting plate 11 and/or the third light-transmitting plate 32, and the size of the polarizing layer 31 may be equal to or smaller than that of the first light-transmitting plate 11 and/or the third light-transmitting plate 32.

In this embodiment, during preparation of the projection display device 100, the polarizing layer 31 and the display layer 20 may be pre- combined through the second adhesive layer 50 to form a composite component; the composite component is then combined with the first light-transmitting plate 11 and the third light-transmitting plate 32 by thermal pressing, thereby obtaining the projection display device 100.

FIG. 5 illustrates a schematic diagram of a projection display device 100 according to a fourth embodiment of the present disclosure. The fourth embodiment differs from the third embodiment of the present disclosure in that the third light-transmitting plate 32 is disposed between the display layer 20 and the polarizing layer 31. It can be understood that the first light-transmitting plate 11, the display layer 20, the third light-transmitting plate 32 and the polarizing layer 31 are sequentially stacked in the direction from the first side 101 toward the second side 102.

In this embodiment, the third light-transmitting plate 32 has a transmittance of less than or equal to 98% for the polarized light L1, for example, less than or equal to 50%, less than or equal to 30%, or even less than or equal to 10%.

In this embodiment, as illustrated in FIG. 5, the third light-transmitting plate 32 is connected to the display layer 20 through the fourth adhesive layer 70. The material, the transmittance and the thickness of the fourth adhesive layer 70 may be set with reference to the third embodiment of the present disclosure, and will not be repeated here.

Optionally, the size of the display layer 20 may be equal to or smaller than that of the first light-transmitting plate 11 and/or the third light-transmitting plate 32, and the size of the polarizing layer 31 may be equal to or smaller than that of the first light-transmitting plate 11 and/or the third light-transmitting plate 32.

Embodiments of a second aspect of the present disclosure provide a vehicle, which includes a vehicle window and a projection light source configured to provide a projection image. At least part of the vehicle window is the projection display device 100 according to the embodiments of the first aspect of the present disclosure. The inner light-transmitting layer 10 of the projection display device 100 faces the interior of the vehicle to serve as inner glass of the vehicle window, or faces the exterior of the vehicle to serve as outer glass of the vehicle window.

In some embodiments, the projection light source may be a light-emitting diode (LED), a liquid crystal display (LCD), a digital light processing (DLP) projection light source, or any other image projection light source. The projection light source may be a fixed light source, such as being fixed on a body sheet metal inside the vehicle; or may be a mobile light source, such as a mobile phone. The projection light source may be disposed inside the vehicle or outside the vehicle.

In some embodiments, the inner light-transmitting layer 10 of the projection display device 100 faces the interior of the vehicle, and the projection light source is disposed inside the vehicle to project the projection image toward the inner light-transmitting layer 10. Therefore, the projection image is visible to people inside the vehicle, but substantially not visible to people outside the vehicle.

In some other embodiments, the inner light-transmitting layer 10 of the projection display device 100 faces the exterior of the vehicle, and the projection light source is disposed outside the vehicle to project the projection image toward the inner light-transmitting layer 10. Therefore, the projection image is visible to people outside the vehicle, but substantially not visible to people inside the vehicle.

The purpose, technical features and technical effects of the present disclosure have been further described above by means of some embodiments. It should be understood that the embodiments are meant to facilitate understanding of the principles of the present disclosure, rather than limit the scope of the present disclosure. Any modifications, alternations, improvements, etc., made without departing from the concepts and principles of this disclosure shall fall within the scope of the present disclosure.

**Claims**

1.    A projection display device, two opposite sides of which are a first side and a second side respectively, wherein the projection display device comprises an inner light-transmitting layer, a display layer and an outer light-transmitting layer which are sequentially stacked in a direction from the first side toward the second side;

the display layer is configured to display a projection image received from a projection light source;

the inner light-transmitting layer is configured to allow the projection image displayed on the display layer to be displayed toward the first side; and

the outer light-transmitting layer is configured to restrict the projection image displayed on the display layer from being displayed toward the second side.

2.    The projection display device according to claim 1, wherein light projected by the projection light source is polarized light; and

the inner light-transmitting layer is configured to transmit the polarized light reflected by the display layer; and/or the outer light-transmitting layer is configured to absorb the polarized light transmitted through the display layer.

3.    The projection display device according to claim 2, wherein the inner light-transmitting layer comprises a first light-transmitting plate with an incident surface facing the projection light source, and the first light-transmitting plate has a transmittance of greater than or equal to 90% for the polarized light.

4.    The projection display device according to claim 3, wherein the projection image displayed by the display layer has a first luminance;

the projection image reflected by the incident surface of the first light-transmitting plate has a second luminance; and
a ratio of the first luminance to the second luminance is greater than or equal to 4.5.

5.    The projection display device according to claim 3, wherein the polarized light is P-polarized light, which is incident on the incident surface at an incident angle $\theta_i$ that satisfies a formula:

$$\theta_i = \tan^{-1}(n_g/n_i)$$

where $n_g$ denotes a refractive index of the first light-transmitting plate, and $n_i$ denotes a refractive index of air.

6.    The projection display device according to claim 3, wherein the inner light-transmitting layer further comprises a second light-transmitting plate, which is disposed between the first light-transmitting plate and the display layer.

7.    The projection display device according to any one of claims 2 to 6, wherein the outer light-transmitting

**EP 4 653 947 A1**

layer comprises a polarizing layer having an optical axis, and the optical axis is orthogonal to a polarization direction of the polarized light incident on the polarizing layer.

8. The projection display device according to claim 7, wherein the outer light-transmitting layer further comprises a third light-transmitting plate;

   the polarizing layer is disposed between the display layer and the third light-transmitting plate; and
   the third light-transmitting plate has a transmittance of less than or equal to 50% for natural light.

9. The projection display device according to claim 7, wherein the outer light-transmitting layer further comprises a third light-transmitting plate disposed between the display layer and the polarizing layer.

10. The projection display device according to claim 7, wherein a luminance of the projection image transmitted through the polarizing layer is a third luminance, and the third luminance is less than or equal to 5 nits.

11. A vehicle, comprising:

   a vehicle window, at least part of which is the projection display device according to any one of claims 1 to 10; and
   a projection light source configured to provide a projection image toward the inner light-transmitting layer of the projection display device.

EP 4 653 947 A1

FIG. 1

9

FIG. 2

FIG. 3

FIG. 4

FIG. 5

## INTERNATIONAL SEARCH REPORT

| International application No. |
|---|
| **PCT/CN2023/077099** |

### A. CLASSIFICATION OF SUBJECT MATTER

G03B21/00(2006.01)i

According to International Patent Classification (IPC) or to both national classification and IPC

### B. FIELDS SEARCHED

Minimum documentation searched (classification system followed by classification symbols)

IPC:G03B

Documentation searched other than minimum documentation to the extent that such documents are included in the fields searched

Electronic data base consulted during the international search (name of data base and, where practicable, search terms used)

CNABS, CNTXT: 投影, 入射, 布鲁斯特, 角, 偏振, 隐私, 车, 显示; VEN, USTXT, WOTXT, EPTXT: project, incidence, brewster, angle, polarization, privacy, vehicle, display

### C. DOCUMENTS CONSIDERED TO BE RELEVANT

| Category* | Citation of document, with indication, where appropriate, of the relevant passages | Relevant to claim No. |
|---|---|---|
| X | CN 218446361 U (APPOTRONICS CORPORATION LTD.) 03 February 2023 (2023-02-03) description, paragraphs 30-119, and figures 1-9 | 1-4, 6-11 |
| Y | CN 218446361 U (APPOTRONICS CORPORATION LTD.) 03 February 2023 (2023-02-03) description, paragraphs 30-119, and figures 1-9 | 5 |
| X | CN 111660769 A (FUYAO GLASS INDUSTRY GROUP CO., LTD.) 15 September 2020 (2020-09-15) description, paragraphs 30-41, and figures 1-4 | 1, 11 |
| X | CN 113415051 A (FUYAO GLASS INDUSTRY GROUP CO., LTD.) 21 September 2021 (2021-09-21) description, paragraphs 39-42, and figure 6 | 1, 11 |
| X | JP 2017090617 A (ASAHI GLASS CO., LTD.) 25 May 2017 (2017-05-25) description, paragraphs 16-98, and figures 1-5 | 1, 11 |
| Y | CN 104267499 A (FUYAO GLASS INDUSTRY GROUP CO., LTD.) 07 January 2015 (2015-01-07) description, paragraphs 32-36, and figure 1 | 5 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 October 2023** | **01 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/077099** |

**C.      DOCUMENTS CONSIDERED TO BE RELEVANT**

| Category* | Citation of document, with indication, where appropriate, of the relevant passages | Relevant to claim No. |
| --- | --- | --- |
| A | JP 2019066774 A (DAINIPPON PRINTING CO., LTD.) 25 April 2019 (2019-04-25) entire document | 1-11 |

Form PCT/ISA/210 (second sheet) (July 2022)

**INTERNATIONAL SEARCH REPORT**
Information on patent family members

International application No.

**PCT/CN2023/077099**

| Patent document cited in search report | | | Publication date (day/month/year) | Patent family member(s) | | | Publication date (day/month/year) |
|---|---|---|---|---|---|---|---|
| CN | 218446361 | U | 03 February 2023 | None | | | |
| CN | 111660769 | A | 15 September 2020 | None | | | |
| CN | 113415051 | A | 21 September 2021 | CN | 113415051 | B | 11 November 2022 |
| JP | 2017090617 | A | 25 May 2017 | None | | | |
| CN | 104267499 | A | 07 January 2015 | US | 2017242247 | A1 | 24 August 2017 |
| | | | | US | 10437054 | B2 | 08 October 2019 |
| | | | | JP | 2017538141 | A | 21 December 2017 |
| | | | | JP | 6302140 | B2 | 28 March 2018 |
| | | | | EP | 3187917 | A2 | 05 July 2017 |
| | | | | EP | 3187917 | B1 | 10 March 2021 |
| | | | | WO | 2016058474 | A2 | 21 April 2016 |
| | | | | CN | 104267499 | B | 17 August 2016 |
| JP | 2019066774 | A | 25 April 2019 | JP | 7110575 | B2 | 02 August 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113415051 A